# EUROPEAN PATENT APPLICATION

(11) **EP 3 151 578 A1**
(43) Date of publication of application: **05.04.2017**
(21) Application number: 14893066.2
(22) Date of filing: 23.12.2014
(51) Int. Cl.: H04N 21/45, H04N 21/466, H04N 21/431

(54) **DISPLAY DEVICE, USER TERMINAL DEVICE, SERVER, AND METHOD FOR CONTROLLING SAME**

(30) Priority: 27.05.2014 KR 20140063643
(71) Applicant: Samsung Electronics Co., Ltd., Gyeonggi-do 16677 (KR)
(72) Inventor: JEON, Byung-jeong, Ansan-si Gyeonggi-do 426-747 (KR); LEE, Young-ah, Seoul 138-727 (KR); KIM, Jae-yeop, Seoul 138-945 (KR); MOON, Joo-sun, Seoul 137-880 (KR); JEONG, Seong-wook, Seoul 136-771 (KR)
(74) Representative: Taor, Simon Edward William
(86) International application number: PCT/KR2014/012703
(87) International publication number: WO 2015/182844

(57) **Abstract**

A display device is disclosed. The display device comprises: a display unit for displaying a content; a communication unit for receiving, by performing a communication with a user terminal device, information about a user activity performed in the user terminal device; and a control unit for generating user preference information on the basis of received information about the user activity and the attribute of the content to be displayed and providing a recommended content on the basis of the generated user preference information.

## Description

### TECHNICAL FIELD

The present invention relates to a display device, a user terminal device, a server, and methods for controlling the same, and more particularly, to a display device for providing a recommended content, a user terminal device, a server, and methods for controlling the same.

### BACKGROUND ART

The development of electronic technology has developed various types of display devices. In particular, display devices, such as a TV, a PC, a laptop computer, a tablet PC, a portable phone, an MP3 player, and the like, have high supply rates to be used in most homes.

In order to meet needs of users who want newer and more diverse functions, efforts to make display devices a little newer forms have been made. For example, there have been provided functions of analyzing preferences of users and recommending the users contents that are expected to be preferred by the users.

However, according to the prior art, a recommended content is provided based on information directly input by a user, and thus a satisfaction level of the user is not high.

### DETAILED DESCRIPTION OF THE INVENTION

### TECHNICAL PROBLEM

The present invention provides a display device for determining a preference of a user by automatically analyzing a viewing pattern of the user and providing a recommended content based on the preference of the user, a user terminal device, a server, and methods for controlling the same.

### TECHNICAL SOLUTION

According to an aspect of the present invention, a display device includes a display unit for displaying a content, a communication unit for receiving information about a user activity performed in a user terminal device by performing a communication with the user terminal device, and a control unit for generating user preference information based on the received information about the user activity and a content contribute of the displayed content and providing a recommended content based on the generated user preference information.

The control unit may generate the user preference information based on a correlation between the received information about the user activity and the displayed content.

The control unit may determine whether the received information about the user activity is in a positive or negative relation to the displayed content and generate the user preference information based on the determined correlation.

The control unit may extract the content attribute of the displayed content based on metadata information of the displayed content.

The information about the user activity may include at least one of a user activity time and the number of user activities.

The information about the user activity may include information about a user activity associated with Social Network Service (SNS).

The information about the user activity may include information about a user activity of at least one of the content, an attribute of the content, and at least one object comprised in the content.

The control unit may generate the user preference information based on the received information about the user activity and at least one scene of the displayed content.

The display device may further include a sensor unit for sensing a viewing pattern of a user. The control unit may generate the user preference information based on the viewing pattern of the user.

The control unit may provide a preset item indicating a content attribute, which is a recommendation base, together when providing a recommended content according to the user preference information.

According to another aspect of the present invention, a user terminal device includes a communication unit for performing a communication with a display device, a user interface unit for receiving a user interaction, and a control unit for transmitting information about a user activity input through the user interface unit to the display device, and receiving and displaying recommended content information according to user preference information generated based on the information about the user activity.

The user preference information may be generated based on a correlation between the received information about the user activity and the displayed content.

According to another aspect of the present invention, a server includes a communication unit for receiving information about a content attribute of a displayed content from a display device and receiving information about a user activity performed in a user terminal device from the user terminal device, and a control unit for generating user preference information based on the received information about the content attribute and the information about the user activity and transmitting recommended content information according to the user preference information to the display device or the user terminal device.

The control unit may generate the user preference information based on a correlation between the received information about the user activity and the displayed content.

The control unit may determine whether the received information about the user activity is in a positive or negative relation to the displayed content and generate the user preference information based on the determined correlation.

According to another aspect of the present invention, a method of controlling a display device, includes displaying a content, receiving information about a user activity performed in a user terminal device by performing a communication with the user terminal device, and generating user preference information about the received information about the user activity and a content attribute of the displayed content and providing a recommended content based on the generated user preference information.

The providing of the recommended content may include generating the user preference information based on a correlation between the received information about the user activity and the displayed content.

The providing of the recommended content may include determining whether the received information about the user activity is in a positive or negative relation to the displayed content and generate the user preference information based on the determined correlation.

The providing of the recommended content may extract a content attribute of the displayed content based on metadata information of the displayed content.

The information about the user activity may include at least one of a user activity time and the number of user activities.

The information about the user activity may include information about a user activity associated with Social Network Service (SNS).

The information about the user activity may include information about a user activity of at least one of the content, an attribute of the content, and at least one object included in the content.

The providing of the recommended content may include generating the user preference information based on the received information about the user activity and at least one scene of the displayed content.

The method may further include sensing a viewing pattern of a user. The providing of the recommended content may include generating the user preference information based on the viewing pattern of the user.

The method may further include providing a preset item indicating a content attribute, which is a recommendation base, together when providing the recommended content according to the user preference information.

According to another aspect of the present invention, a method of controlling a user terminal device, includes performing a communication with a display device, transmitting information about a user activity input through a user interface unit to the display device, and receiving recommended content information generated according to user preference information generated based on the information about the user activity from the display device and displaying the recommended content information.

The user preference information may be generated based on a correlation between the received information about the user activity and the displayed content.

According to another aspect of the present invention, a method of controlling a server, includes receiving information about a content attribute of a displayed content from a display device and receiving information about a user activity performed in a user terminal device from the user terminal device, generating user preference information based on the received information about the content attribute and the information about the user activity, and transmitting recommended content information generated according the user preference information to the display device or the user terminal device.

The generating of the user preference information may include generating the user preference information based on a correlation between the received information about the user activity and the displayed content.

The generating of the user preference information may include determining whether the received information about the user activity is in a positive or negative relation to the displayed content and generate the user preference information based on the determined correlation.

### ADVANTAGEOUS EFFECTS OF THE INVENTION

According to various exemplary embodiments of the present invention described above, a user preference may be determined based on an unintended viewing pattern of a user, and thus a recommended content may be provided according to the user preference. Therefore, a more abundant viewing experience may be provided to the user.

### DESCRIPTION OF THE DRAWINGS

FIGS. 1A and 1B are diagrams illustrating a display system according to an exemplary embodiment of the present invention.
FIGS. 2A and 2B are block diagrams illustrating a configuration of a display device according to an exemplary embodiment of the present invention.
FIG. 3 is a block diagram illustrating a configuration of a storage unit according to an exemplary embodiment of the present invention.
FIG. 4 is a block diagram illustrating a configuration of a user terminal device according to an exemplary embodiment of the present invention.
FIG. 5 is a block diagram illustrating a configuration of a server according to an exemplary embodiment of the present invention.
FIGS. 6A, 6B, and 7A through 7C are diagrams illustrating a paring method between a display device and a user terminal device, according to an exemplary embodiment of the present invention.
FIGS. 8A through 8C are diagrams illustrating a method of realizing a network topology, according to an exemplary embodiment of the present invention.
FIGS. 9A and 9B are diagrams illustrating a method of realizing a network topology, according to another exemplary embodiment of the present invention.
FIGS. 10A through 10C, 11A, and 11B are diagrams illustrating a user activity type, according to various exemplary embodiments of the present invention.
FIGS. 12A through 12F are diagrams illustrating a recommended content providing UI, according to various exemplary embodiments of the present invention.
FIGS. 13A, 13B, and 14 are diagrams illustrating a method of searching for a recommended content, according to an exemplary embodiment of the present invention.
FIGS. 15A through 15D are diagrams illustrating methods of providing a UI of a user terminal device, according to various exemplary embodiments of the present invention.
FIG. 16 is a flowchart illustrating a method of controlling a display device, according to an exemplary embodiment of the present invention.
FIG. 17 is a flowchart illustrating a method of controlling a user terminal device, according to an exemplary embodiment of the present invention.
FIG. 18 is a flowchart illustrating a method of controlling a server, according to an exemplary embodiment of the present invention.

### BEST MODE

### MODE OF THE INVENTION

Hereinafter, the present invention will be described in more detail with reference to the attached drawings.

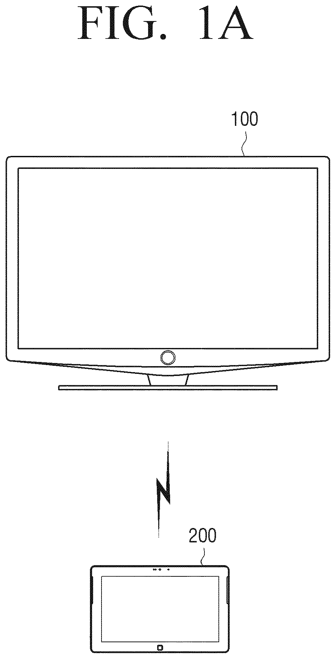

FIG. 1A is a diagram illustrating a display system according to an exemplary embodiment of the present invention.

Referring to FIG. 1A, the display system according to the exemplary embodiment includes a display device 100 and a user terminal device 200.

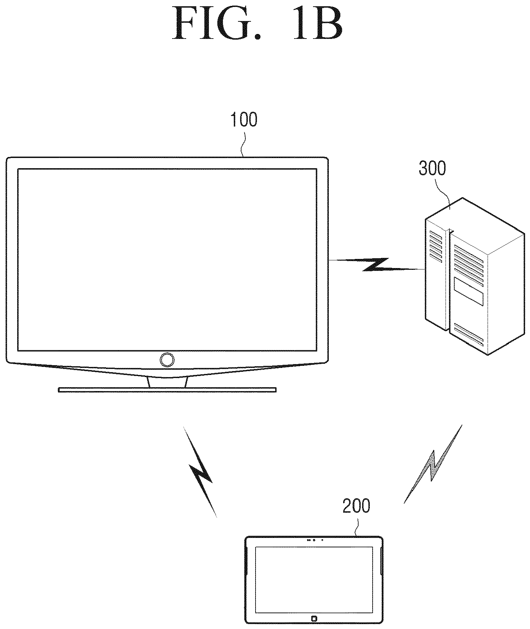

The display device 100 may be realized as a digital TV as shown in FIG. 1 but is not limited thereto. The display device 100 may be realized as various types of devices having display functions like a Personal Computer (PC), a Navigation, Kiosk, a Digital Information Display (DID), and the like.

If the display device 100 is realized as the digital TV, the display device 100 may be controlled by the user terminal device 200. In this case, the user terminal device 200 may perform a remote control function with respect to the display device 100 in a remote control mode or when driving an application providing a remote control function. In other words, the user terminal device 200 may receive a user command for controlling the display device 100 and transmit a control signal corresponding to the received user command to the display device 100. However, the user terminal device 200 is not limited thereto and thus may be realized as various types to sense a motion of the user terminal device 200 and transmit a signal corresponding to the motion, recognize a voice and transmit a signal corresponding to the voice, or transmit a signal corresponding to an input key. In this case, the user terminal device 200 may be realized to include a motion sensor, a touch sensor, an optical Joystick (OJ) sensor applying optical technology, a physical button (e.g., Tact Switch), a display screen, a microphone, or the like in order to receive various types of user commands. Also, the user terminal device 200 may be realized to provide various types of functions including a remote control function, a call function, an Internet function, a capturing function, and the like.

The display device 100 may be connected to the user terminal device 200 to receive a content from the user terminal device 200 and play the content. In particular, the display device 100 may receive the content in a streaming form and play the content in real time.

Also, the display device 100 may provide a User Interface (UI) screen including various types of information according to a user command input through the user terminal device 200.

In particular, the display device 100 may determine a user preference based on user activity information received from the user terminal device 200 and provide recommended content information based on the determined user preference. This will be described in detail with reference to a block diagram illustrating detailed configurations of the display device 100 and the user terminal device 200.

FIG. 1B is a diagram illustrating a display system according to another exemplary embodiment of the present invention.

Referring to FIG. 1B, the display system according to the another exemplary embodiment includes a display device 100, a user terminal device 200, and a server 300.

The server 300 may determine a user preference based on user activity information performed in the user terminal device 200 by performing a communication with the display device 100 and/or the user terminal device 200 and provide recommended content information based on the determined user preference. In other words, the server 300 may be realized to generate user preference information performed in the display device 100 of FIG. 1A and perform a function of recommending a content based on the generated preference information. Here, the server 300 may be realized as a central server (or an integrated server) taking charge of an interaction between various types of operating systems and applications in all network systems, a cloud server using cloud computing technology, or the like. Here, cloud computing refers to cloud-based computing technology, i.e., a web-based software service that loads a program in a utility data server on the Internet, downloads the program to a computer, a portable phone, or the like, and uses the program. A detailed description of the cloud computing is omitted.

Hereinafter, a method of providing recommended content information according to an exemplary embodiment of the present invention will be described in detail with reference to the attached drawings.

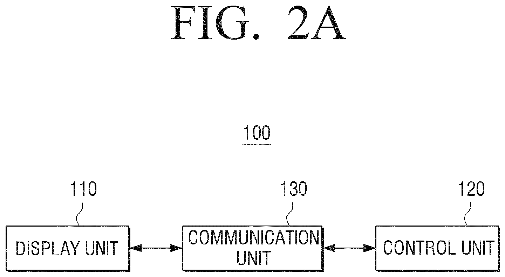

FIG. 2A is a block diagram illustrating a configuration of a display device according to an exemplary embodiment of the present invention.

Referring to FIG. 2A, a display device 100 includes a display unit 110, a communication unit 120, and a control unit 130.

The display unit 110 displays various types of screen. Here, the screens may include various types of content play screens including an image, a moving image, a text, music, and the like, an application execution screen including various types of contents, a web browser screen, a Graphic User Interface (GUI) screen, and the like.

In this case, the display unit 110 may be realized as a Liquid Crystal Display (LCD) Panel, an Organic Light Emitting Diodes (OLED), or the like but is not limited thereto. Also, the display unit 110 may be realized as a flexible display, a transparent display, or the like.

In particular, the display unit 110 may provide a recommended content under control of the control unit 130 when a preset event occurs, and a detailed description of this will be described later.

### < Interconnection of Electronic Device and User Terminal Device >

The communication unit 120 performs a communication with an external device according to various types of communication methods.

In particular, the communication unit 120 may perform a communication with the user terminal device 200 of FIG. 1. Here, the communication unit 120 may perform a communication with the user terminal device 200 or an external server (not shown) through various types of communication methods such as BlueTooth (BT), Wireless Fidelity (WI-FI), Zigbee, Infrared (IR), a Serial Interface, a Universal Serial Bus (USB), Near Field Communication (NFC), and the like.

In detail, if a preset event occurs, the communication unit 130 may be in an interconnection state by performing a communication with the user terminal device 200 according to a predefined communication method. Here, the interconnection may refer to an operation of initializing a communication between the display device 100 and the user terminal device 200, an operation of forming a network, an operation of performing device pairing, and the like, i.e., all communicable states. For example, device identification information of the user terminal device 200 may be provided to the display device 100, and thus a pairing process between the user terminal device 200 and the display device 100 may be performed. For example, if a preset event occurs in the user terminal device 200, the user terminal device 200 may search for a peripheral device through Digital Living Network Alliance (DLNA) technology and perform paring with the searched device to be in an interconnection state.

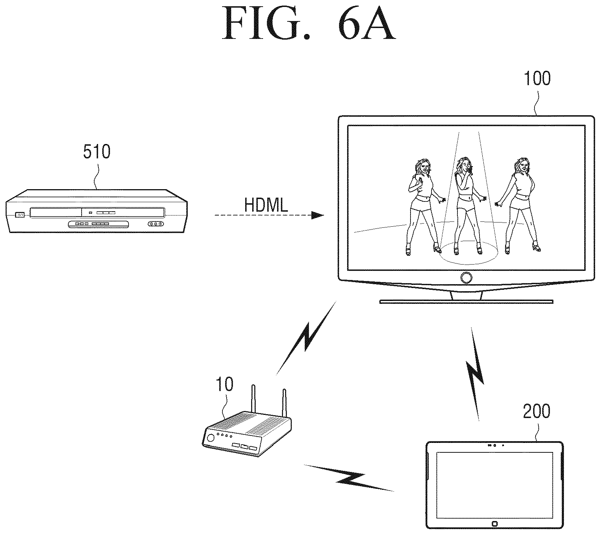

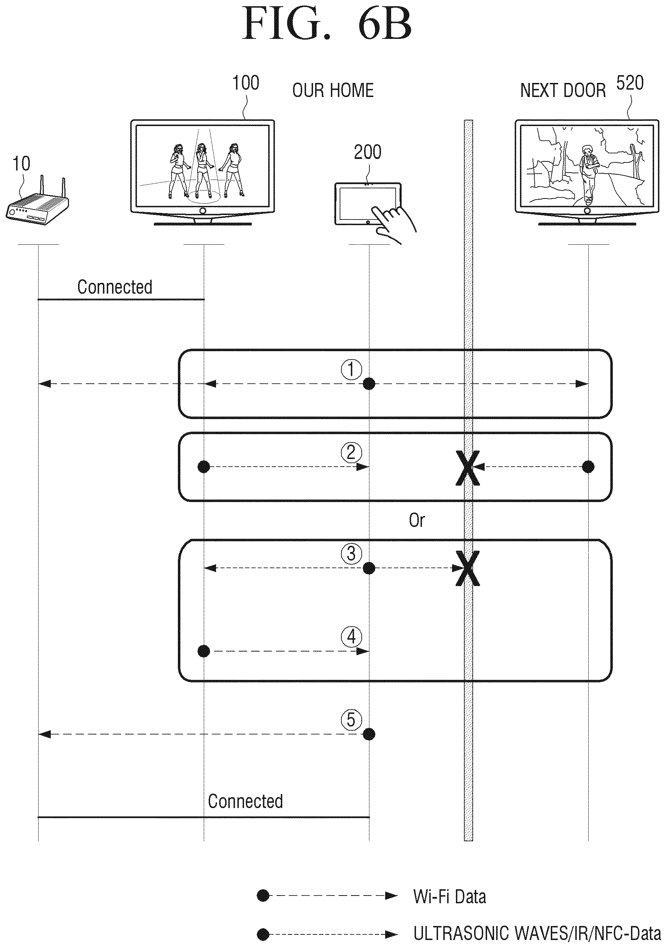

Here, the preset event may occur in at least one of the display device 100 and the user terminal device 200. For example, a case where a user command to select the display device 200 as a device to be controlled or a case where power of the display device 200 is turned on may correspond to this. A pairing method between the display device 100 and the user terminal device 200 according to an exemplary embodiment of the present invention will be described in more detail with reference to FIGS. 6A and 6B.

If the display device 100 is paired with the user terminal device 200 to perform a communication, the communication unit 120 receives information about a user activity performed in the user terminal device 200. Here, the information about the user activity may be information about an activity associated with using SNS on the user terminal device 200, an activity associated with controlling of the display device 100 , a user interaction of a content displayed on the display device 100, a user interaction of a content stored in the user terminal device 200, and the like, i.e., may be information about all activities that may be performed in the user terminal device 200. This will be described in detail later.

The control unit 130 controls an overall operation of the display device 100.

In particular, the control unit 130 may generate user preference information based on the information about the user activity received from the user terminal device 200 and a content attribute (or information) of the content displayed on the display unit 110. Also, the control unit 130 may provide a recommended content based on the generated user preference information.

In detail, the control unit 130 may generate the user preference information based on a correlation between the information about the user activity received from the user terminal device 200 and the content attribute of the displayed content. In this case, the control unit 130 may extract the content attribute of the displayed content based on metadata information of the displayed content.

### < Information about User Activity >

Information about a user activity performed in the user terminal device 200 may have various forms.

In detail, the information about the user activity may include information about various types of user activities including a user activity of Social Networking Service (SNS), a user interaction of at least one of a content displayed on the display unit 110, a content attribute, and at least one object included in the content, a user interaction of a content stored or displayed in the user terminal device 200, and the like.

Here, the user activity of the SNS may be various types of information that may be performed through the SNS, such as an action of capturing a content scene displayed on the display unit 110 and uploading the content scene to an SNS server, an action of writing comments on the uploaded content scene, an action of displaying a preference by voting or the like, an action of writing comments in real time at Twitter, and the like.

Also, the user interaction of the at least one of the content displayed on the display unit 110, the content attribute, and the at the least one object included in the content may be a user interaction of directly displaying a preference for the content and may be a form input through a preset button, a touch pad, or the like included in the user terminal device 200, a preset user voice, or a preset user motion form. For example, the user interaction may be a user voice "Yes", a user motion of drawing " 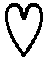 ", a user touch input of drawing " 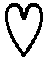 ", or the like.

Also, the user interaction of the content stored or displayed in the user terminal device 200 may be realized as various attachment interactions of the corresponding content. For example, a preferred content may be selected based on various types of setting manipulations of a content, an edition manipulation of the content, a sharing manipulation of the content, a manipulation associated with generation of the content, or the like, and user preference information may be generated based on information about the preferred content. For example, user preference information about a particular actor may be generated according to a manipulation of setting a picture of the corresponding actor to a Lock-screen, a background screen, a profile photo, or the like.

Besides these, in relation to or regardless of the displayed content, all user activities performed in the user terminal device 200 may correspond to this. For example, all activities that may be performed in the user terminal device 200, including an action of making a phone call, an action of sending character messages, an action of performing Internet searching based on search words associated or unassociated with the displayed content, an action of playing a game, and the like, may correspond to this.

### < Displayed Content >

The content displayed on the display unit 110 may be realized as various forms.

In detail, the displayed content may be various types of application contents or the like such as a broadcast content provided in a broadcast viewing mode, a VOD content provided in a content play mode, a webpage mode provided in a web mode, a game content, and the like. For example, a case where a user plays a particular web moving image content through a webpage may correspond to this.

Also, the displayed content may include an actually broadcast or played content, EPG information, text information, thumbnail information, and the like. For example, thumbnail information provided on a UI screen for selecting a VOD content may also be included in the displayed content.

### < Generation of Preference Information >

The control unit 130 may determine whether information about a user activity received from the user terminal device 200 is in a positive or negative relation to the displayed content and generate user preference information based on the determined correlation.

For example, if the displayed content information is uploaded to SNS or comments are written on the SNS or if an interest in the displayed content is displayed like searching for the displayed content through the Internet, the information about the user activity received from the user terminal device 200 may increase the user preference information of the corresponding displayed content. Alternatively, if detailed information of a particular VOD content is searched through the user terminal device 200 when a UI screen for selecting a VOD content is displayed on a screen, the information about the user activity received from the user terminal device 200 may increase user preference information of the corresponding content. In this case, a database of a text, an image, or the like indicating a positive or negative interest in the content may be provided, and a determination may be made as to whether the displayed content is in a positive or negative relation to the received user activity, based on the database. For example, if a comment "I don't like this drama" is written on a particular content, a text "don't like" may be determined as displaying a negative interest.

As another example, if contents unassociated with the displayed content information are searched through the Internet or an uninterest in the displayed content is displayed like playing a game or the like, the information about the user activity received from the user terminal device 200 may decrease the user preference information about the corresponding content.

In this case, the control unit 130 may generate information about a content, in detail, user preference information about at least one of the content, an attribute of the content, and at least one object included in the content. For example, if a content is a broadcast content, the control unit 130 may generate user preference information about various types of content information such as a broadcast program, a genre of the broadcast program, an actor, a filmed background, a filming place, a content scene, and the like.

Also, the control unit 130 may generate user preference information by applying different weights based on a user activity time, and the number of activities, and the like. For example, in a case of activity of performing Internet searching for a displayed content, different weights may be provided to calculate user preference information based on an Internet searching time.

Also, the control unit 130 may generate the user preference information based on a user viewing pattern. In detail, the control unit 130 may generate the user preference information based on visual information such as eye positions of a user, a stopped time of eyes, a smiling time, an exclamation utterance, a mouth shape, and the like that are sensed by a sensor unit (not shown).

### < Recommendation of Content >

The control unit 130 may provide a recommended content based on user preference information generated by the above-described method.

For example, if it is determined that a user preference for a romantic comedy genre is high, based on user activity information received from the user terminal device 200, the control unit 130 may recommend a content of the romantic comedy genre. Alternatively, if it is determined that a user preference for a particular program is high, the control unit 130 may recommend an episode that is not viewed by a viewer. Also, if it is determined that a user preference for a particular actor is high, the control unit 130 may recommend a content where the corresponding star appears.

In this case, the control unit 130 may provide a recommended content through an additional UI screen but may provide a real-time broadcast content provided according to a channel zapping command along with recommended information. In other words, a GUI indicating that a corresponding broadcast content is recommended merely for the recommended broadcast content may be provided. For example, if it is determined that the user preference for the romantic comedy genre is high, based on the user activity information received from the user terminal device 200, and a broadcast content of the corresponding genre is zapped, a recommended GUI may be displayed on the corresponding content. Also, if broadcast information is provided in an EPG form, a recommended GUI may be displayed in romantic comedy genre content information of an EPG. However, preference information for another user of a recommended content may be displayed and provided together. For example, the number of users who empathize with and show preferences for a recommended content (e.g., the number of users who share the corresponding content through SNS). Also, the number of users who empathize with the recommended content may be displayed as a GUI having a speech bubble form but is not limited thereto.

Also, the control unit 130 may control to add and display an item indicating a content attribute when providing a recommended content. Here, the item may indicate a content attribute that is a recommendation base according to user preference information generated based on a user activity. For example, if a romantic drama content is recommended based on a preference of a user who enjoys dramas of a romance genre, an item including shape " 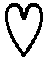 " symbolizing romance may be provided along with a recommended content. However, the content attribute that is the recommendation base may be various types including a genre and the like. For example, the content attribute may be various attributes including a detailed genre (for example, baseball), real variety, a broadcast time, an appearing person, a character, an item, emotion, an image, a background image, a sound, a scene, and the like. Here, the detailed genre may be distinguished from a hierarchical classification genre (e.g., sports, entertainment, drams, or the like) provided by EPG information. For example, if a drama content where a particular actor appears is recommended based on a preference of a user who enjoys a drama where the particular actor appears, an item including an image indicating the corresponding actor may be provided along with a recommended content. In this case, the item may be produced to be pre-stored in the display device 100 or may be automatically generated according to the content attribute. Also, the item may be produced or modified by a user.

Also, the controller 130 may provide a recommended content with reference to information of a user activity received from the user terminal device 100 and user information. For example, a romantic drama content is recommended based on a preference of a user who enjoys a drama of a romance genre, the romantic drama content may be recommended in consideration of a generation (or an age) and a gender of a user. In other words, in a case of women between 20s and 30s, one of romantic drama contents having high preferences of women between 20s and 30s may be recommended.

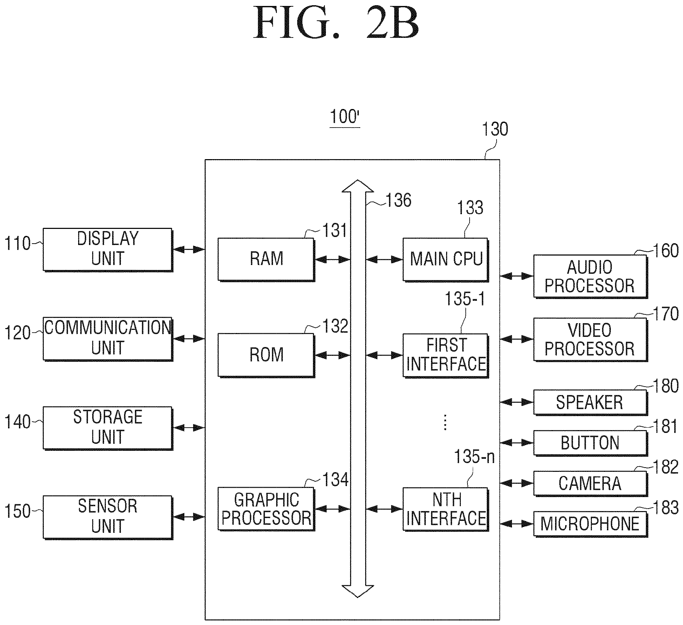

FIG. 2B is a block diagram illustrating a detailed configuration of a display device 100' according to another exemplary embodiment of the present invention. Referring to FIG. 2B, the display device 100' includes a display unit 110, a communication unit 120, a control unit 130, a storage unit 140, a sensor unit 150, an audio processor 160, a video processor 170, a speaker 180, a button 181, a camera 182, and a microphone 183. Detailed descriptions of elements of FIG. 2B overlapping with elements of FIG. 2A are omitted.

The control unit 130 controls an overall operation of the display device 100' by using various types of programs stored in the storage unit 140.

In detail, the control unit 130 includes an RAM 131, an ROM, a main CPU 133, a graphic processor 134, first through n^{th} interfaces 135-1 through 135-n, and a bus 136.

The RAM 131, the ROM 132, the main CPU 133, the graphic processor 134, the first through n^{th} interfaces 135-1 through 135-n, and the like may be connected to one another through the bus 136.

The first through n^{th} interfaces 135-1 through 135-n are connected to various types of elements described above. One of interfaces may be a network interface that is connected to an external device through a network.

The main CPU 133 performs booting by using an O/S stored in the storage unit 150 by accessing the storage unit 140. Also, the main CPU 133 performs various types of operations by using various types of programs, contents, data, and the like stored in the storage unit 140.

A command set and the like for system booting is stored in the ROM 132. If a turn-on command is input, and thus power is supplied, the main CPU 133 copies the O/S stored in the storage unit 140 into the RAM 131, executes the O/S, and boots a system according to a command stored in the ROM 132. If the booting is completed, the main CPU 133 copies various types of programs stored in the storage unit 140 into the RAM 131, executes the copied application programs, and performs various types of operations.

The graphic processor 134 generates a screen including various types of objects such as an icon, an image, a text, and the like by using an operator (not shown) and a renderer (not shown). The operator (not shown) calculates attribute values such as coordinate values at which the objects will be respectively displayed, shapes, sizes, colors, and the like of the objects, and the like according to a layout of a screen based on a received control command. The renderer generates a screen having various types of layouts including objects based on the attribute values calculated by the operator (not shown). The screen generated by the renderer (not shown) is displayed in a display area of the display unit 110.

The storage unit 140 stores various types of data such as an Operating System (O/S) software module for driving the display device 100', various types of multimedia contents, various types of applications, various types of contents input or set when executing an application, and the like.

Also, the storage unit 140 may store various types of information such as information of a user activity received from the user terminal device 200, user preference information generated based on received information, recommended content information, and the like.

In addition, the storage unit 140 may store various types of user information such as user certification information (e.g., an ID and PASSWORD), a gender, age, and a hobby of a user, and the like if a corresponding service is provided according to a user certification.

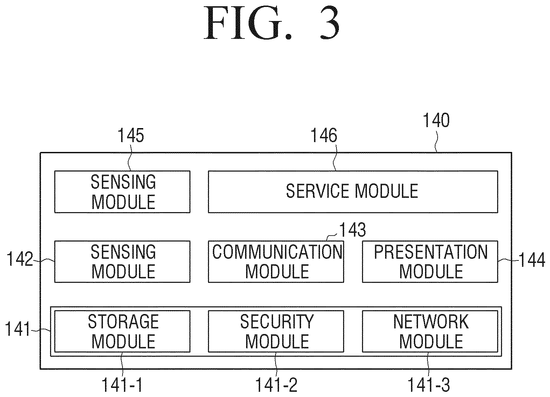

Besides these, various types of software modules stored in the storage unit 140 will be described with reference to FIG. 3.

Referring to FIG. 3, software including a base module 141, a sensing module 142, a communication module 143, a presentation module 144, a web browser module 145, and a service module 146 may be stored in the storage unit 140.

The base module 141 refers to a base module that processes signals respectively transmitted from pieces of hardware included in the display device 100 and transmits the processed signals to an upper layer module. The base module 141 includes a storage module 141-1, a security module 141-2, a network module 141-3, and the like. The storage module 141-1 is a program module that manages a database (DB) or a registry. The main CPU 133 may read various types of data by accessing a database of the storage unit 140 by using the storage module 141-1. The security module 141-2 is a program module that supports a certification, a permission, a secure storage, and the like of hardware, and the network module 141-3 is a module for supporting a network connection and includes a DNET module, an UPnP module, and the like.

The sensing module 142 is a module that collects information from various types of sensors, and analyzes and manages the collected information. The sensing module 142 may include a touch recognition module, a head direction recognition module, a face recognition module, a voice recognition module, a motion recognition module, an NFC recognition module, and the like.

The communication module 143 is a module for performing a communication with an external source. The communication module 143 may include a device module used in a communication with an external device, a messaging module such as a messenger program, a Short Message Service (SMS) & Multimedia Message Service (MMS) program, an e-mail program, or the like, and a phone call module including a Call Info Aggregator program module, a VoIP module, and the like.

The presentation module 144 is a module for configuring a display screen. The presentation module 144 includes a multimedia module for playing and outputting a multimedia content and a UI rendering module for performing UI and graphic processing. The multimedia module may include a player module, a camcorder module, a sound processing module, and the like. Therefore, the presentation module 144 performs an operation of generating and playing a screen and a sound by playing various types of multimedia contents. The UI rendering module may include an Image Compositor module that combines images, a coordinate combination module that combines and generates coordinates on a screen that will display an image, an X11 module that receives various types of events from hardware, a 2D/3D UI toolkit that provides a tool for configuring a UI of a 2D or 3D form, and the like.

The web browser module 145 refers to a module that accesses a web server by performing web browsing. The web browser module 145 may include various types of modules such as a web view module configuring a webpage, a download agent module that performs downloading, a bookmark module, a Webkit module, and the like.

The service module 146 is a module that includes various types of applications for providing various types of services. In detail, the service module 146 may include various types of program modules such as an SNS program, a content play program, a game program, an e-book program, a calendar program, an alarm management program, other widgets, and the like.

The sensor unit 150 performs a function of sensing a viewing pattern of a user.

In detail, the sensor unit 150 may be realized to include a photographing unit (not shown) that captures a user and a detector (not shown) that detects a viewing pattern of the user based on an image captured by the photographing unit (not shown).

The photographing unit (not shown) is disposed in an outer area of a screen. For example, the photographing unit (not shown) may be disposed in a left center or right center bezel area of the screen but is not limited thereto. The photographing unit (not shown) captures the user, in particular, a user face. The photographing unit (not shown) includes a lens module including a lens and an image sensor. A shape input through the lens is input as an optical signal into the image sensor acting as a film, and the image sensor converts the input optical signal into an electrical signal and transmits the electrical signal to an eye detector (not shown). For example, the photographing unit (not shown) may be realized as a general camera, a stereo camera, a depth camera, or the like.

The detector (not shown) detects a viewing pattern of the user. In detail, the detector (not shown) may detect an area at which the user looks, a time when eyes of the user stop, and the like by tracking a face direction of the user, eyeball motions of the user, and the like. Also, the detector (not shown) may detect various types of visual information that may indicate a preference for a displayed content, such as a smiling time of the user, an exclamation utterance, a mouth shape, and the like of the user.

In detail, the detector (not shown) distinguishes an eyeball image from a user captured image captured by the photographing unit (not shown) through face modeling technology. Here, the face modeling technology is an analysis process of converting a face image acquired by the photographing unit into digital information for processing and transmitting the face image, i.e., one of an Active Shape Modeling (ASM) technique and an Active Appearance Modeling (AAM) technique may be used. Also, the detector (not shown) may determine motions of eyeballs by using the distinguished eyeball image. Also, the detector (not shown) may determine the area at which the user looks by detecting a direction toward which the user looks by using the eyeball motions and comparing the direction, toward which the user looks, with coordinate information of a pre-stored display screen.

In this case, the control unit 130 may generate user preference information based on the viewing pattern of the user detected by the sensor unit 150 and an attribute of the displayed content. For example, if an image of the user, who smiles the preset number of times and for a preset time or more when broadcasting a drama of a comic genre, is detected, a preference of the user for a comic genre content may be determined as being high, and corresponding user preference information may be generated.

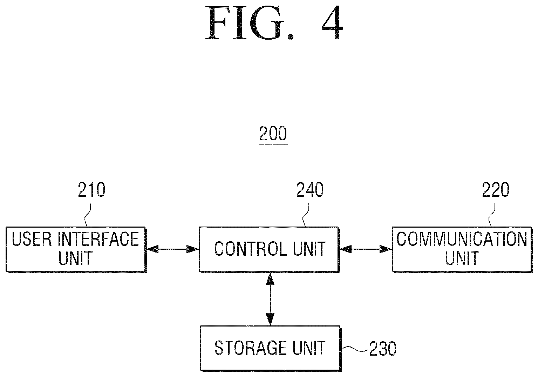

FIG. 4 is a block diagram illustrating a configuration of a user terminal device according to an exemplary embodiment of the present invention.

Referring to FIG. 4, a user terminal device 200 incudes a user interface unit 210, a communication unit 220, a storage unit 230, and a control unit 240. Here, the user terminal device 200 may be a portable terminal and may be realized as various types such as a tablet computer, a portable phone, a PMP, a PDA, and the like.

Also, the user terminal device 200 may be realized as a touch-based portable terminal including a touch pad or a touch screen on a front surface thereof. Therefore, the user terminal device 200 may be realized to include a touch sensor so as to execute a program by using a finger or a pen (e.g., a stylus pen). For this, the user terminal device 200 may be realized to include a touch sensor for receiving various types of user commands, an optical Joystick (OJ) sensor applying optical technology, or the like

The user interface unit 210 receives various types of user interactions. In particular, the user interface unit 210 may receive user interactions of various types of UI screens provided through a display included in the user interface unit 210. Here, the UI screens may include various types of content play screens such as an image, a moving image, a text, music, and the like, an application execution screen including various types of contents, a web browser screen, a Graphic User Interface (GUI) screen, and the like.

In particular, if the user terminal device 200 is realized as a remote control device for controlling the display device 100, the user interface unit 210 may provide various types of UI screens for controlling a function of the display device 100. For example, a menu screen for selecting various functions providable from the display device 100 and a UI screen for selecting various types of modes. Here, the UI screens may include various types of content play screens such as an image, a moving image, a text, music, and the like, an application execution screen including various types of contents, a web browser screen, a Graphic User Interface (GUI) screen, and the like. For example, if the display device 100 is realized as a digital TV, a UI screen for channel zapping, a UI screen for volume controlling, a UI screen for content selecting, a UI screen for application selecting, or the like may be provided.

Also, the user interface unit 210 may provide a recommended content under control of the control unit 240 when a preset event occurs.

The communication unit 220 performs a communication with an external device according to various types of communication methods.

In particular, the communication unit 220 may perform a communication with the display device 100 of FIG. 1. Here, the communication unit 220 may perform a communication with the user terminal device 200 or an external server (not shown) through various types of communication methods such as BlueTooth (BT), Wireless Fidelity (WI-FI), Zigbee, Infrared (IR), a Serial Interface, a Universal Serial Bus (USB), Near Field Communication (NFC), and the like.

In detail, if a preset event occurs, the communication unit 220 may be in an interconnection state by performing a communication with the display device 100 according to a predefined communication method. Here, the interconnection state and the preset event have been described above with reference to FIG. 2A, and thus their detailed descriptions are omitted.

### < Information Transmitted and Received with Display Device >

If the communication unit 220 is in the interconnection state by performing the communication with the display device 100, the communication unit 220 transmits information about a user activity performed in the user terminal device 200 to the display device 100.

Also, the communication unit 220 may transmit a signal corresponding to an input user command to an electronic device 200 or may receive various types of information from the display device 100.

In detail, the communication unit 220 may receive various types of information about a case where the display device 100 enters into at least one of a broadcast viewing mode for viewing a real-time broadcast channel through the display device 100, a content play mode for playing a VOD content, a menu providing mode for providing a preset menu, a game mode for playing a game, and a web mode for providing a web browser, a case where the display device 100 is in a corresponding mode, a case where the display device 100 strays from the corresponding mode, and the like.

### < Information Transmitted and Received with External Server >

The communication unit 220 may perform a communication with an external server (not shown).

The communication unit 220 transmits information about a user activity performed in the user terminal device 200 to the external server 300. In this case, the external server (not shown) may generate user preference information based on information about a content received from the display device 100 and information about a user activity received from the user terminal device 200.

Also, the communication unit 220 may receive information about a UI screen corresponding to a state of the display device 100, control information corresponding to UI information, various types of information provided through the user interface unit 210, and the like from the external server (not shown). For example, if an SNS screen is provided to the user terminal device 200 according to a user command, corresponding information may be received from the external server (not shown).

The external server (not shown) may be connected to the Internet or the like through a network to update information about the user terminal device 200 and the display device 100. For example, the external server may update device driver information, control information, UI information, and the like.

### < Information Stored in User Terminal Device >

The storage unit 230 stores various types of data such as an Operating System (O/S) software module for driving the user terminal device 200, various types of multimedia contents, and the like.

In particular, the storage unit 230 may store information about various types of user activities occurring in the user terminal device 200 according to an exemplary embodiment of the present invention. For example, the storage unit 230 may store information about a breakdown of SNS uses, a breakdown of Internet searches, and the like.

Also, the storage unit 230 may store data for configuring various types of UI screens provided from the user interface unit 210 according to various exemplary embodiments of the present invention.

In addition, the storage unit 230 may store data for generating a control signal corresponding to user commands input through various types of UI screens.

Besides these, various types of software modules stored in the storage unit 230 are similar to elements disclosed in FIG. 3, and thus their detailed descriptions are omitted.

The control unit 240 controls an overall operation of the user terminal device 200.

In particular, the control unit 240 may transmit information about various types of user activities performed through the user terminal device 200 to the display device 100 or the external server (not shown), and receive and provide recommended content information based on preference information generated based on the corresponding information. In other words, the recommended content information may be provided through the display device 100 or may be provided through the user terminal device 200.

Also, the control unit 240 may receive a user command for controlling the display device 100 and transmit a control signal corresponding to the received user command to the display device 100. However, the control unit 240 is not limited thereto and may be realized as various types that sense a motion of the user terminal device 200 and transmit a signal corresponding to the motion, recognize a voice and transmit a signal corresponding to the recognized voice, or transmit a signal corresponding to an input key.

Also, the control unit 240 may provide various types of UI screens based on information received from the display device 100 or the external server (not shown). For example, the control unit 240 may receive EPG information to provide an EPG screen.

Also, the control unit 240 may provide a corresponding UI on the user interface unit 210 based on state information about a context of the display device 100 received through the communication unit 220 or may provide a corresponding UI according to an input user command on the display unit 110. Here, the context of the display device 100 refers to a situation where controlling is required, i.e., may be a meaning including various types of states and situations such as a function provided from an electronic device, a provided content type, a provided image panel, a display state, and the like. For example, a corresponding UI may be provided from the display device 100 based on a content type or may be provided according to an input touch interaction.

Also, the control unit 240 may receive a content from the display device 100 and play the content. For example, the control unit 240 may perform a mirroring function of receiving a content displayed on the display device 100 in a streaming form and playing the content in real time.

In addition, the control unit 240 may provide various types of terminal functions provided from a smartphone, such as a music player function, a call function, an application execution function, an Internet function, and the like.

Also, although not shown in the drawing, the user terminal device 200 may further include a sensor unit (not shown). The sensor unit (not shown) includes a touch sensor, a geomagnetic sensor, a gyro sensor, an acceleration sensor, a proximity sensor, a grip sensor, and the like. Therefore, the sensor unit (not shown) may sense various types of manipulations such as a touch, a rotation, a gradient, a pressure, an approach, a grip, and the like. In this case, the control unit 240 may transmit various types of information sensed by the sensor unit (not shown) to the display unit 100.

Although not shown in the drawing, the user terminal device 200 may be realized to automatically change from an OFF state into an ON state at a moment that the user terminal device 200 is taken by a user or rapidly display an image (e.g., an initial menu) in a standby mode.

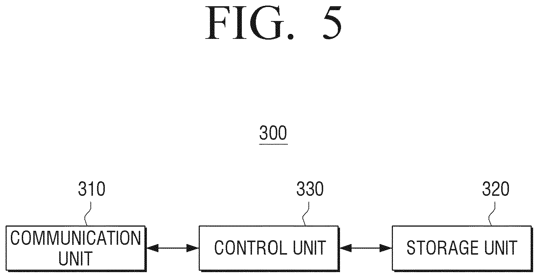

FIG. 5 is a block diagram illustrating a configuration of a server according to an exemplary embodiment of the present invention.

Referring to FIG. 5, a server 300 includes a communication unit 310, a storage unit 320, and a control unit 330.

The server 300 may determine a user preference based on user activity information performed in the user terminal device 200 by performing a communication with the display device 100 and/or the user terminal device 200 and provide recommended content information based on the determined user preference according to the exemplary embodiment shown in FIG. 1B. In other words, the server 300 may be realized to perform a function performed in the display device 100 of FIG. 1A.

The communication unit 310 performs communications with the display device 100 and/or the user terminal device 200.

In detail, the communication unit 310 may receive information about a content displayed on the display device 100 and information about a user activity occurring in the user terminal device 200 from the display device 100 and provide recommended content information to the display device 100 and/or the user terminal device 200.

Alternatively, the communication unit 310 may receive information about a content displayed on the display device 100 from the display device 100, receive information about a user activity occurring in the user terminal device 200 from the user terminal device 200, and provide recommended content information to the display device 100 and/or the user terminal device 200.

The storage unit 320 stores information received from the display device 100 and/or the user terminal device 200, user preference information determined based on the corresponding information, recommended content information generated based on the user preference information, and the like. Also, the storage unit 320 may update and store pieces of stored information when receiving new information.

Also, if a corresponding service is provided according to a user certification, the storage unit 320 may store various types of user information such as a gender, an age, a hobby, and the like of a user.

In addition, the storage unit 320 may store profile information of another user who is in a buddy relationship with the user, activity information of the another user received from a user terminal device (not shown) of the another user, preference information of the another user generated based on the corresponding activity information, and the like.

The control unit 330 controls an overall operation of the server 300. The control unit 330 may be realized as a similar type to a detailed configuration of the control unit 130 of FIG. 2B, but a detailed description thereof is omitted.

The control unit 330 may generate user preference information based on content information received from the display device 100 and user activity information received from the user terminal device 200 and recommend a content based on the generated user preference information. In detail, the control unit 330 may transmit recommended content information to the display device 100 and/or the user terminal device 200.

Also, the control unit 330 may recommend a content based on preference information of another user who is in a preset buddy relationship with the user of the user terminal device 200. For example, the control unit 330 may generate preference information of another user based on activity information received from a user terminal device (not shown) of the another user and transmit recommended content information generated based on the preference information of the another user to the display device 100 and/or the user terminal device 200.

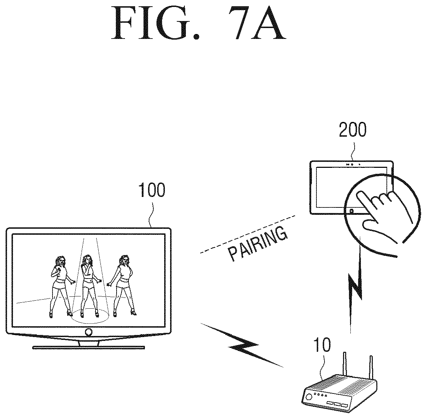

FIGS. 6A, 6B, and 7A through 7C are diagrams illustrating a method of pairing a display device and a user terminal device according to an exemplary embodiment of the present invention.

As shown in FIG. 6A, the display device 100 and the user terminal device 200 may be connected to each other so as to perform a wireless communication through an Access Point (AP) device 10. For example, the AP device 100 may be realized as a wireless router that transmits a Wireless Fidelity (Wi-Fi) signal. However, the display device 100 and the user terminal device 200 may be connected to each other through Wi-Fi Direct that is new Wi-Fi technology of a P2P concept that a Wi-Fi terminal may be directly connected without the wireless router.

As shown, a set-top box 510, which has a home communication terminal function necessary for using a next generation bidirectional multimedia communication service (referred to as an interactive television), such as a VOD content, image plate home shopping, a network game, and the like, may be connected to the display device 100. Here, the set-top box is a device that makes a TV into an Internet user interface, i.e., is a special computer that actually exchanges data through the Internet and has a protocol such as a web browser, TCP/IP, or the like. A recent set-top box may provide a service through a telephone line, a cable TV line, or the like for a web TV service and has a function of receiving and converting an image signal as a basic function.

As shown in FIG. 6B, the user terminal device 200 transmits Wi-Fi data ① to the display device 100. In this case, the user terminal device 200 may be realized to recognize the display device 100 of the same manufacturer but does not recognize a general commercial AP and discards the general commercial AP. In this case, a new Data Type may be defined by using a Wi-Fi standard Format to reduce a necessity of changing H/W Chipset. Therefore, a Chipset company may provide merely an API for new Data Format, and a manufacturer may independently define the new Data Format and maintain the new Data Format as Confidential information. Wi-Fi Data is a Wi-Fi signal and thus may be transmitted even to a TV that is installed in a next door past a wall not to be connected, but paring may be performed by distinguishing this.

Thereafter, the display device 100 transmits response Data ② to the Wi-Fi Data to the user terminal device 200. In detail, the display device 100 that recognizes the Wi-Fi Data responds to current AP connection information thereof. In this case, a response of an object that is not to be connected may be limited through additional technology that enables communications in a limited space/distance such as ultrasonic waves, IR, or NFC.

Alternatively, Data ③ requesting connection information may be transmitted as an alternative of number ②. In this case, right after the Wi-Fi data ①, current AP connection information of outer surrounding TV may be requested by using additional technology such as ultrasonic waves, IR, or NFC. Here, the display device 100 that recognizes Data ① waits for requested data ③, and connection information request Data that is transmitted by the additional technology enabling communications merely in the limited space/distance is not transmitted to the TV that is not to be connected.

Alternatively, response Data ④ to the connection information request may be transmitted as an alternative. Since AP connection information is transmitted by using Wi-Fi, and the connection information request Data ③ is transmitted to merely a TV that is to be connected, the display device 100 that recognizes the Data ③ responds through general Wi-Fi. However, since TV SPK is to be used in case of number ② when using ultrasonic waves, an output range, and the like of SPK are important, and a restriction indicating that a TV necessarily has Mic may exist in case of ③+④.

Thereafter, AP connection request Data ⑤ is transmitted. In this case, current AP connection information is acquired from the display device 100 that is to be connected, and thus a connection may be requested from a corresponding AP by using the information.

Pairing may be performed by minimizing a user intervention according to a pairing method as described above as shown in FIG. 7A. For example, pairing may be performed by merely Power on. In other words, if the display device 100 is first turned on, and the user terminal device 200 is turned on, the user terminal device 200 may acquire existing N/W information of the display device 100 to be connected to N/W and to be paired with the display device 100 without an additional operation. An opposite case is possible. Also, devices that are paired once do not need to be re-paired.

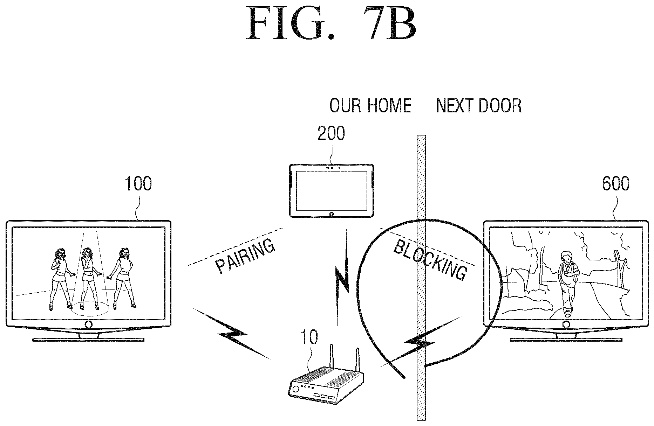

Also, as shown in FIG. 7B, an object to be connected and an object to be unconnected may be distinguished from each other so as to perform pairing. For example, a device (e.g., a TV of a next door) that is not to be paired may be distinguished to be blocked.

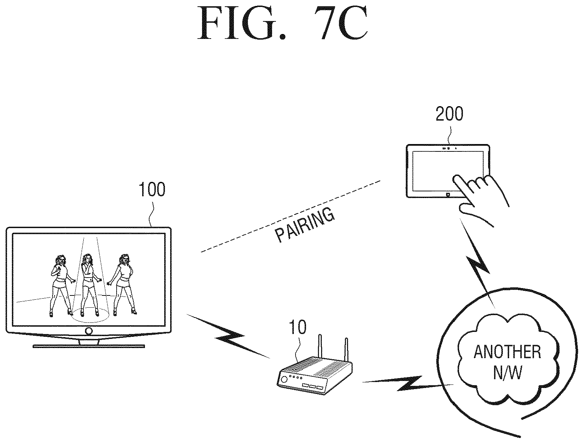

Also, as shown in FIG. 7C, a restriction on an N/W environment may be minimized. For example, although another N/W intervenes, pairing may be performed.

Also, although not shown in the drawing, using of short-range communication technology, such as IR, ultrasonic waves, NFC, or the like, may be considered to transmit or receive pre-connected N/W information of a device to be paired or the like in a limited space.

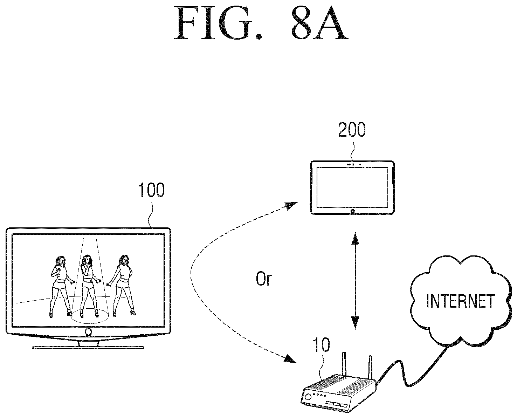

FIGS. 8A through 8C are diagrams illustrating a method of realizing a network topology according to an exemplary embodiment of the present invention.

Referring to FIG. 8A, an Internet access may be realized to be possible through an AP device 10 or a display device 100 at all times. In this case, an access environment may be determined according to whether the display device 100 and the AP device 10 exist or an Internet access state. In other words, the Internet access may be realized to be possible in any case.

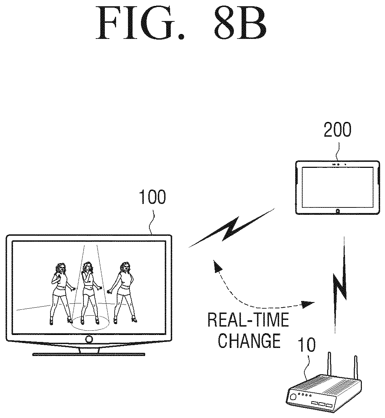

Referring to FIG. 8B, a network topology may be changed into various forms according to a service scenario. For example, when an image is transmitted from the display device 100 to the user terminal device 200 in real time, the display device 100 and the user terminal device 200 may be directly connected to each other in a P2P form. In this case, latency caused by a service change resulting from a rapid change in the network topology may not occur.

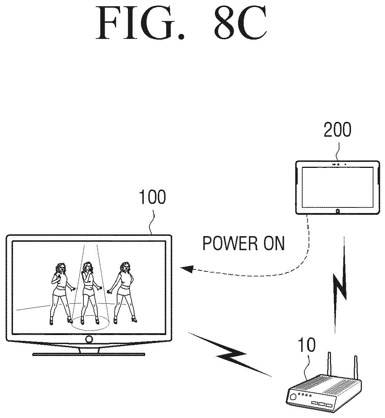

Referring to FIG. 8C, Power On/Off control may be realized to be possible by using Wi-Fi. For example, the user terminal device 200 may turn on power of a TV 100 that is in a Power Off state, through Wi-Fi or may turn off power of the TV 100.

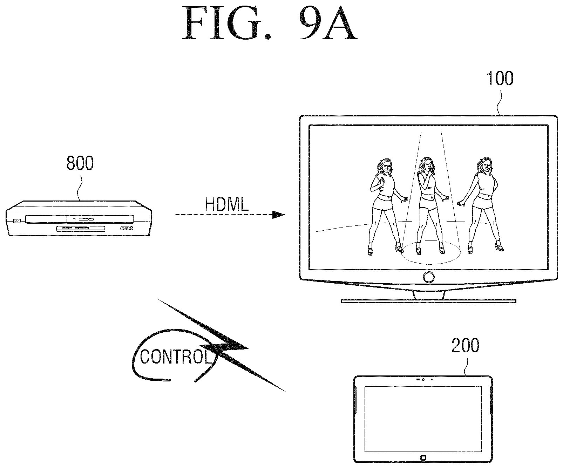

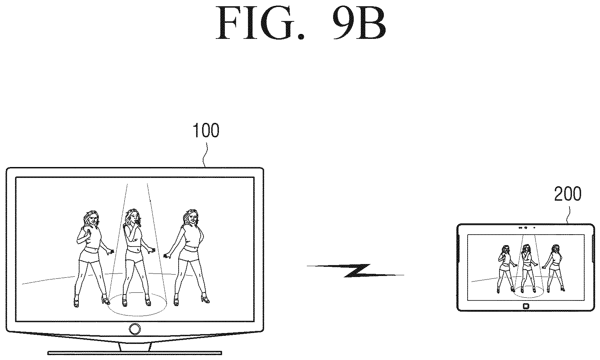

FIGS. 9A and 9B are diagrams illustrating a method of realizing a network topology according to another exemplary embodiment of the present invention.

As shown in FIG. 9A, the user terminal device 200 may be realized to remotely control an external device, such as STB, through a Gateway Server of the display device 10. Also, the user terminal device 200 may be realized to set an integrated remote controller without setup so as to control the external device.

As shown in FIG. 9B, the display device 100 and the user terminal device 200 may provide various types of content streaming such as sweeping viewing, drag-and-drop viewing, Multi-Angle viewing, and the like.

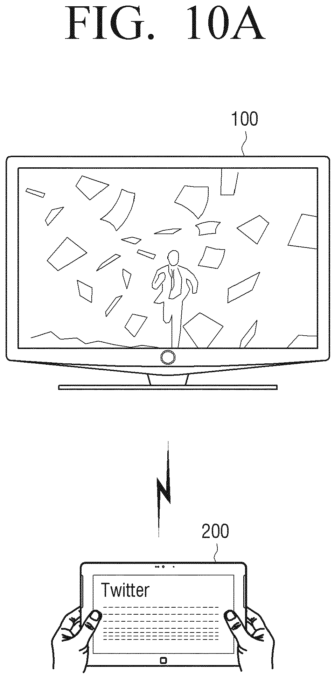

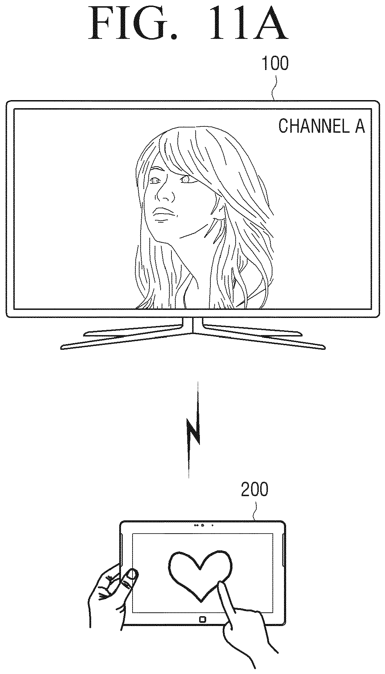

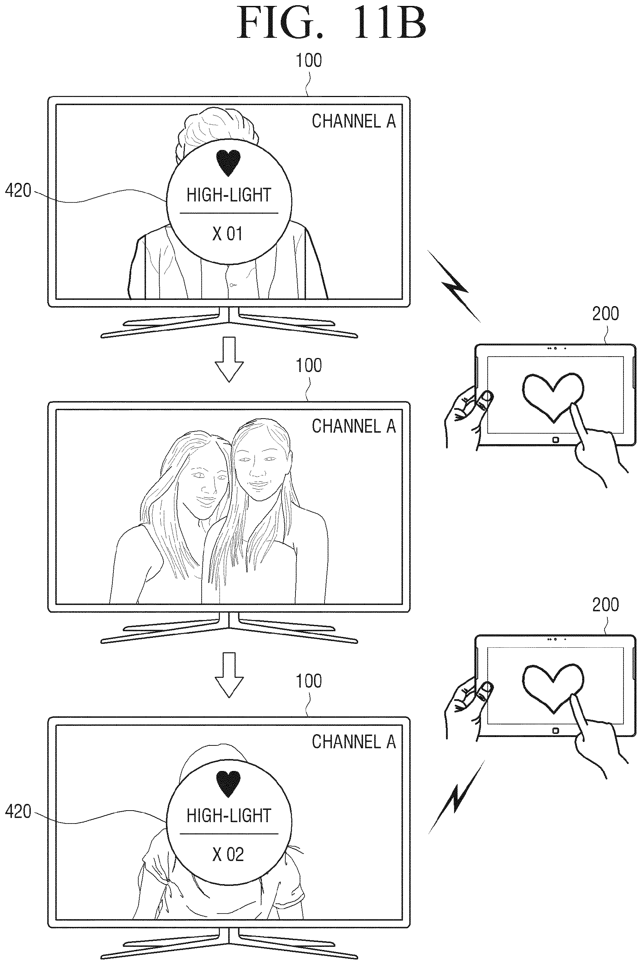

FIGS. 10A through 10C, and FIGS. 11A and 11B are diagrams illustrating a user activity type according to various exemplary embodiments of the present invention.

As shown in FIG. 10A, a user activity in the user terminal device 200 may be an activity of SNS. For example, as shown, the user activity may be various types of activities such as an action of writing comments on a displayed content on Twitter in real time, an action of capturing a corresponding content scene and uploading the corresponding content scene to an SNS server, an action of writing comments on the uploaded content scene, an action of displaying a preference for voting or the like, and the like. If an activity of SNS is an action associated with the displayed content, the corresponding activity may contribute to generating positive preference information about one of various types of attributes of the displayed content. If the activity of the SNS is an action unassociated with the displayed content, the corresponding activity may contribute to generating negative preference information of one of various types of attributes of the displayed content or may not affect generation of preference information.

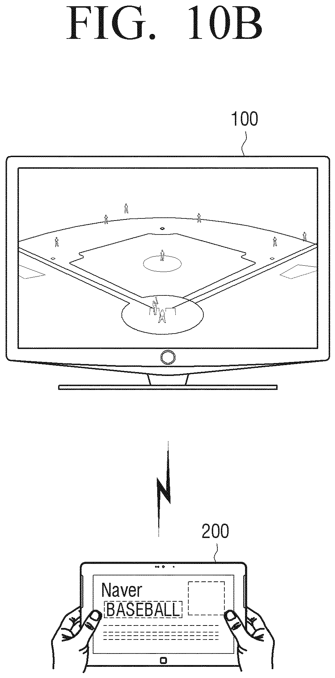

Also, as shown in FIG. 10B, a user activity in the user terminal device 200 may be an activity associated with Internet using. For example, as shown, the activity may be various types of activities such as an action of performing Internet searching based on a search word associated with a displayed content, an action of performing an Internet activity through the Internet based on a search word unassociated with the displayed content, and the like. This Internet searching activity may contribute to generation of positive or negative preference information according to whether the Internet searching activity is associated with the displayed content.

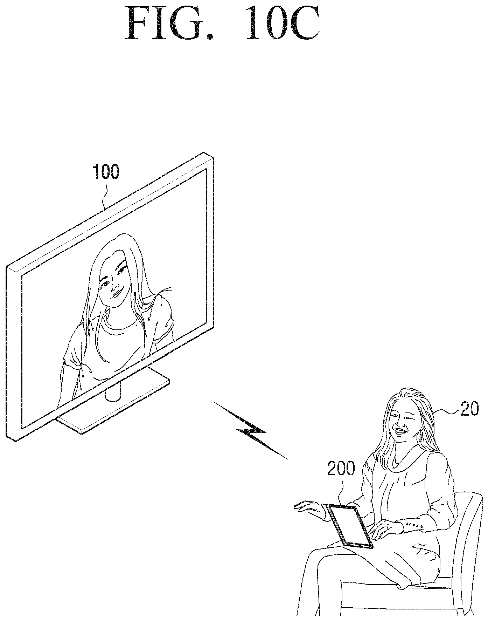

In addition, as shown in FIG. 10C, the user activity may not be an activity performed in the user terminal device 200 but may be visual information such as an eye time, a smiling time, an exclamation utterance, a mouth shape, or the like of the user.

In addition, as shown in FIGS. 11A and 11B, a user activity may be a user interaction of directly displaying a preference for at least one of a displayed content, a content attribute, and at least one object included in the content. For example, as shown in FIG. 11A, a user interaction of displaying a preference for the content, a user interaction of displaying a preference for a scene configuring the content, and the like may be included in this. Here, the user interaction may be a form such as a user touch input of drawing " 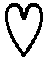 " on a touch pad of the user terminal device 200, a form of manipulating pressing of a preset button of the user terminal device 200, or the like.

However, although not shown, all activities performable in the user terminal device 200, such as an action of making a phone call, an action of sending letter messages, an action of playing a game, and the like, may correspond to an activity for generating user preference information.

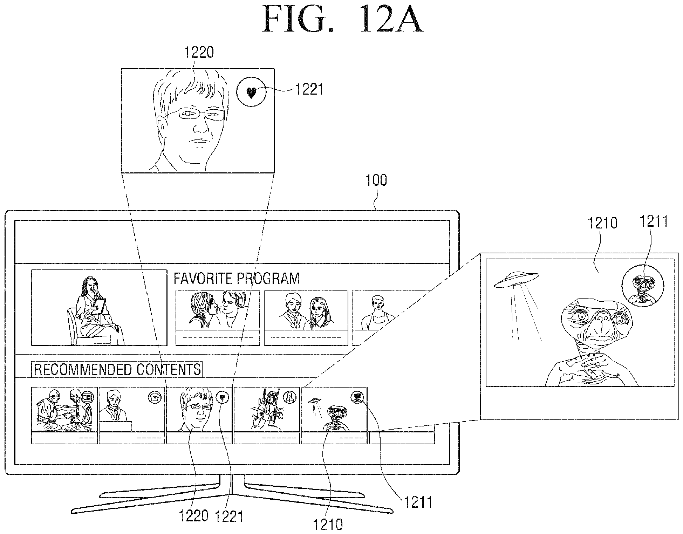

FIGS. 12A through 12F are diagrams illustrating a recommended content providing UI according to various exemplary embodiments of the present invention.

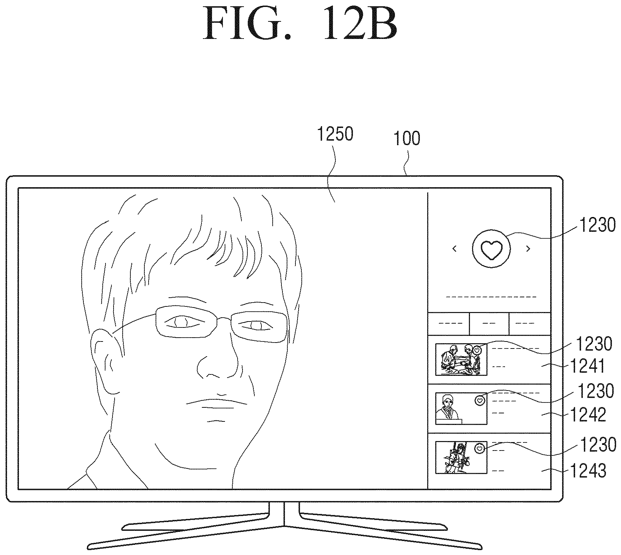

A UI for providing a recommended content may be provided as an additional UI screen on a whole screen of the display device 100 as shown in FIG. 12A or may be provided as an additional UI screen in an area of a screen displaying a content as shown in FIG. 12B.

In this case, an item that is a recommendation reason may be provided together as shown in FIGS. 12A and 12B. For example, as shown in FIG. 12A, an item 1211 symbolizing SF may be provided together if a content 1210 is recommended according to a user preference for a content of an SF genre, and an item 1221 symbolizing romance may be provided together if a content 1220 is recommended according to a user preference for a content of a romance genre so as to provide a reason for recommending the corresponding content to a user. Alternatively, as shown in FIG. 12B, if a displayed content 1250 is a content of a genre preferred by the user, a UI that recommends contents 1241, 1242, and 1243 whose displayed contents belong to the same genre may be provided.

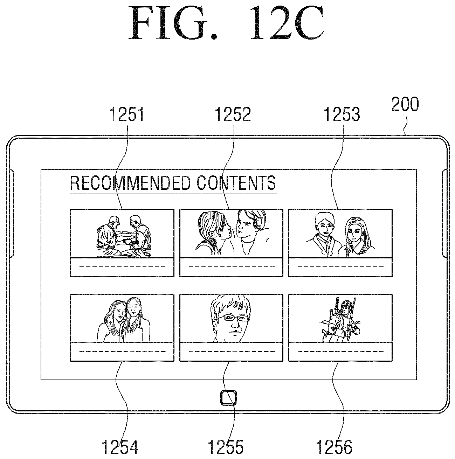

A UI screen as shown in FIGS. 12A and 12B may be provided on the user terminal device 200 not on the display device 100 or an item that is a recommendation reason may not be included in recommended content information 1251 through 1256 as shown in FIG. 12C.

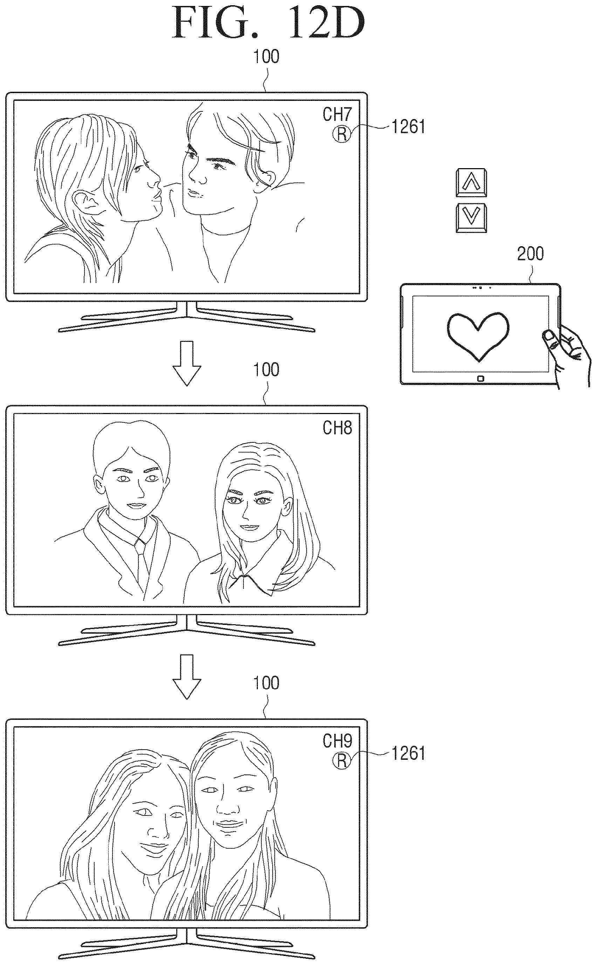

As shown in FIG. 12D, recommendation information may be provided along with a real-time broadcast content that is provided according to a channel zapping command. In other words, a GUI 1261 indicating that the corresponding broadcast content is recommended merely for the recommended broadcast content. For example, if it is determined that a preference of a user for a romantic comedy genre is high, based on user activity information received from the user terminal device 200, and a broadcast content of a corresponding genre is zapped, the GUI 1261 may be displayed on the corresponding content.

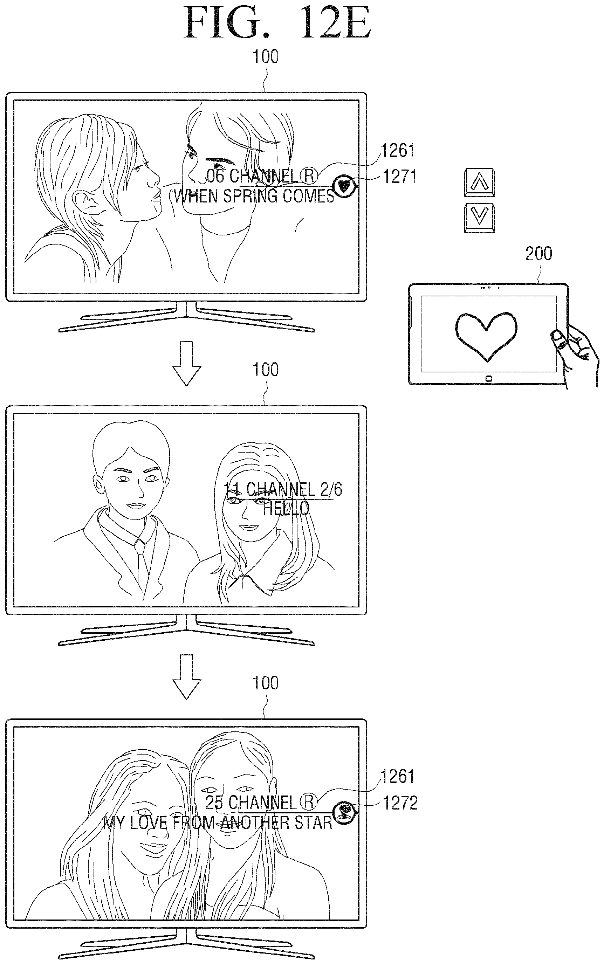

Also, as shown in FIG. 12E, a recommended GUI and an item that is a recommendation reason may be provided along with a real-time broadcast content that is provided according to a channel zapping command. For example, if it is determined that preferences of the user for a romantic genre and an SF genre are high, based on the user activity information received from the user terminal device 200, and a broadcast content of a corresponding genre is zapped, items 1271 and 1272 that are recommendation reasons may be displayed along with the recommended GUI 1261 on the corresponding content.

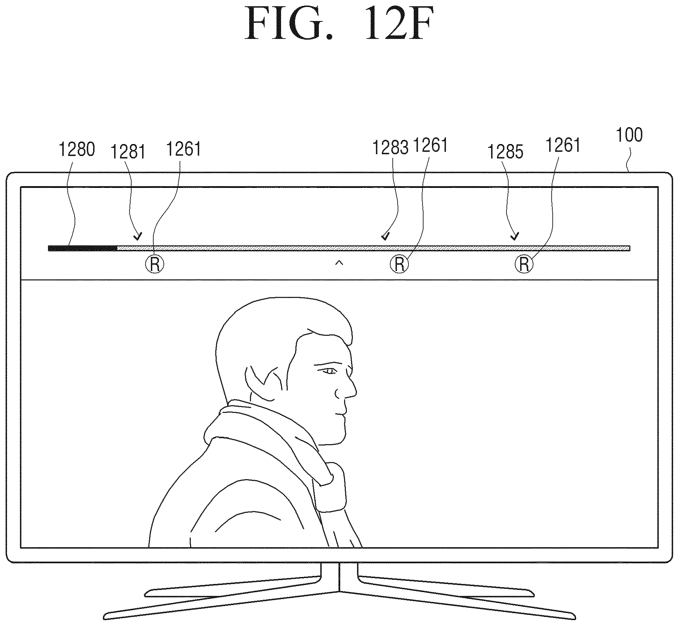

In addition, as shown in FIG. 12F, in a case of VOD content, a scene having a high preference of the user may be recommended. For example, if a preference of the user for a particular actor is high, the recommended GUI 1261 may be provided together at play times 1281, 1283, and 1285 at which an appearance frequency of the corresponding actor is high.

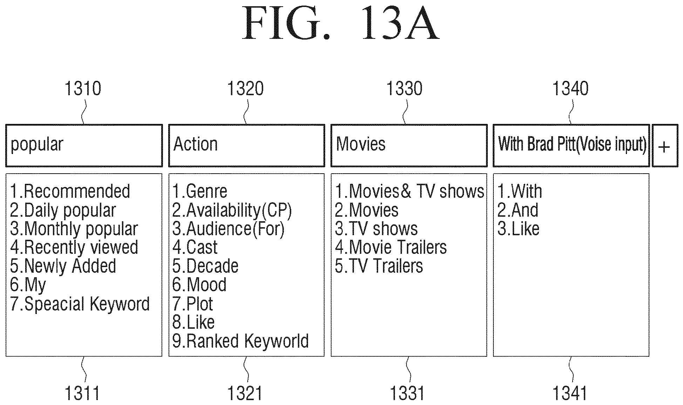

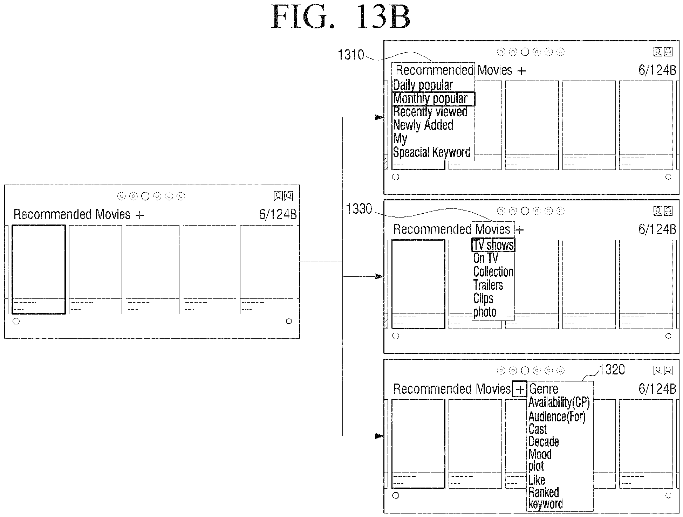

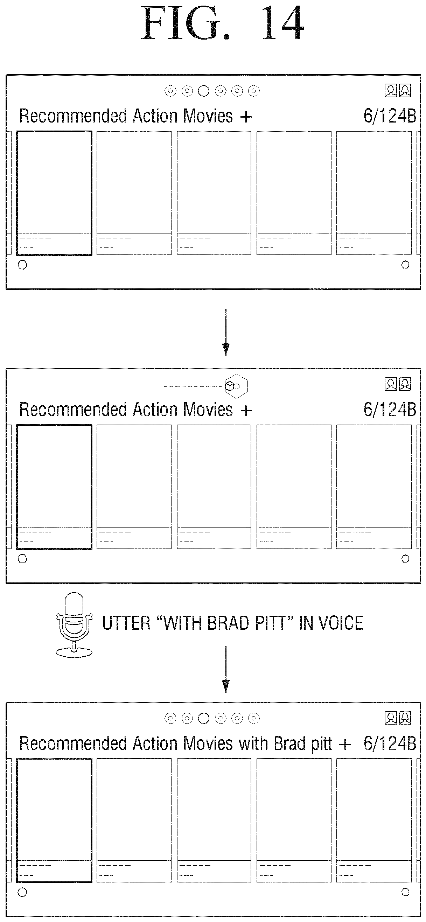

FIGS. 13A, 13B, and 14 are diagrams illustrating a method of searching for a recommended content according to an exemplary embodiment of the present invention.

According to an exemplary embodiment of the present invention, not an existing content searching method but a content searching method using a filter may be used to search for a recommended content according to preference information.

In detail, as shown in FIG. 13A, a recommended content may be searched for by using a Relation filter 1310, a Content filter 1330, and a Sub-tailed filter 1320.

FIG. 13B illustrates a case where "Recommended" is selected as the Relation filter 1310, "Movies" is selected as the Content filter 1330, and "Genre" is selected as the Sub-tailed filter 130 to search for the recommended content.

Also, as shown in FIG. 14, after a search condition using a filter is completed, search words by a user voice may be combined to perform searching. In detail, if a user wants to be recommended a content by adding detailed contents when the content is recommended based on user preference information, the user may utter the corresponding contents as voices and add the voices to the search condition.

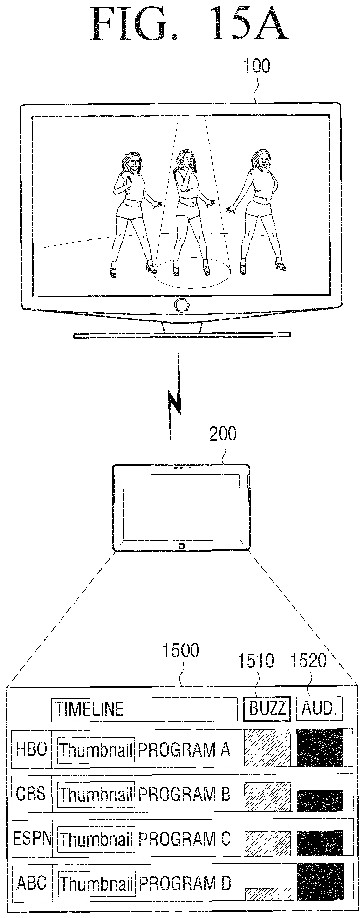

FIGS. 15A through 15D are diagrams illustrating methods of providing a UI of a user terminal device, according to various exemplary embodiments of the present invention.

As shown in FIG. 15A, an EPG screen 1500 may be provided on the user terminal device 200. In this case, whether power of the display device 100 is turned on or off may be unassociated with an operation of the user terminal device 200.

In this case, as shown, content lists may be arranged according to channel orders on an EPG screen, and the EPG screen may be manipulated by a touch manipulation of a user. For example, if the user wants to know future programming information, a time line may be manipulated by a touch & drag (point & drag) method to be moved or jumped to a desired time.

As shown in FIG. 15A, if the user wants to check a broadcast content having a highest SNS sharing degree among playable broadcast contents, "Buzz" filter 1510 may be executed. In this case, content arrangement orders of the EPG screen may be changed into highest orders of SNS sharing information on a corresponding channel number. In this case, the SNS sharing degree (hereinafter referred to as Buzz) may be displayed as a simple infographic icon, and the user may immediately check a Buzz degree with a simple graphic not with complicated statistic figures.

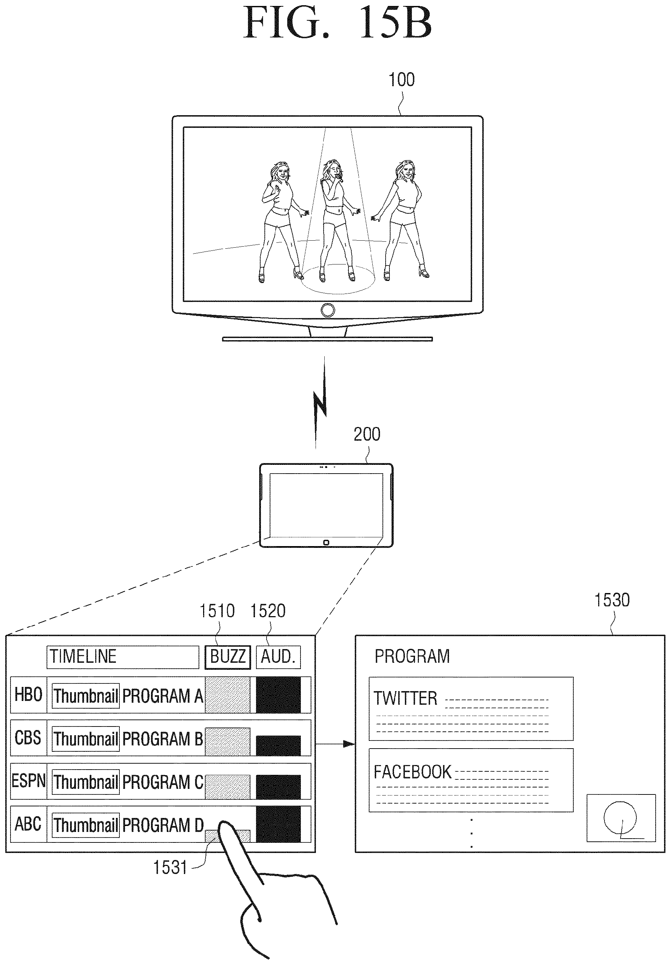

Also, as shown in FIG. 15B, if the user selects a Buzz icon 1531, detailed contents that are mentioned on SNS may be displayed. Therefore, the user may refer to comments of other users about the corresponding content.

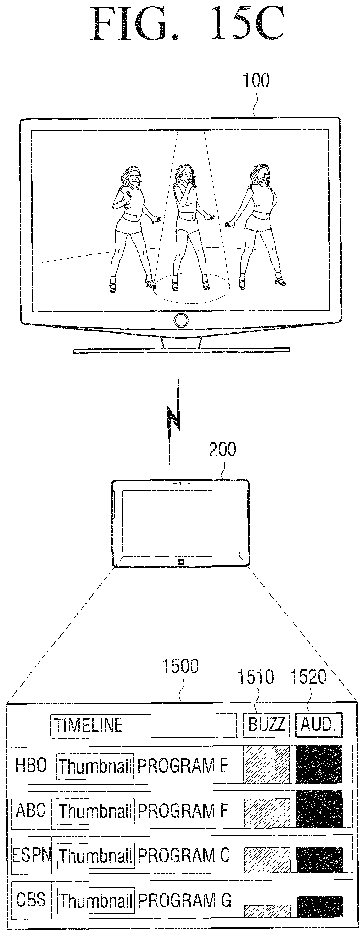

In addition, as shown in FIG. 15C, if the user wants to check a broadcast having a highest viewing rate among playable broadcast contents, "AUD (Audience)" filter 1520 may be executed. In this case, content arrangement orders of the EPG screen may be changed into orders of highest viewing rates on a corresponding channel number. In this case, a viewing rate may be displayed as a simple infographic icon, and the user may check the viewing rate with a simple graphic not with complicated statistic figures.

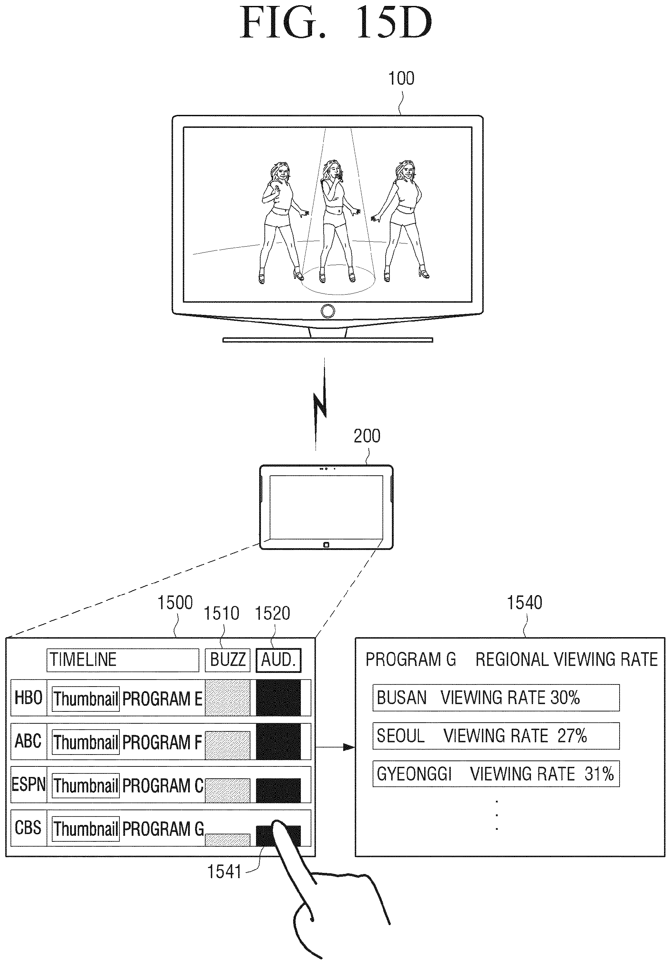

As shown in FIG. 15D, if the user selects the Audience icon 1541, the user may check a viewing rate distribution in detail. In detail, the user may check the viewing rate distribution according to a district (e.g., Seattle), a Time Zone (e.g., Eastern Standard), a profile (e.g. a gender, an age), and the like.

Also, although not shown in the drawings, "Genre" filter may be additionally reflected on the EPG screen besides "Buzz" filter or "AUD (Audience)" filter. In this case, the "Buzz" filter or the "AUD (Audience)" and the "Genre" filter may be combined to filter a content. For example, if the "Buzz" filter and the "Genre" filter are combined, contents may be arranged according to orders of "news" programs that are most frequently mentioned on SNS among a currently broadcast content. As another example, if the "AUD (Audience)" filter and the "Genre" filter are combined, contents may be arranged in orders of "reality" programs having highest viewing rates among a currently broadcast content.

However, the examples described with reference to FIGS. 15A through 15D are not limited to merely a broadcast content but may be equally applied to a VOD content. For example, if the "Buzz" filter is executed with respect to a VOD content, contents may be arranged according to an SNS sharing degree. If the "AUD (Audience)" filter is executed, contents may be arranged according to a content buying rate.

If a particular content is selected on the EPG screen, a content selected on the display device 100 may be executed.

Therefore, an EPG screen may be provided based on preferences of associated people or the public such as acquaintances or the like to make a recommendation appropriate for a viewing purpose of the user, and easier and faster viewing may be provided.

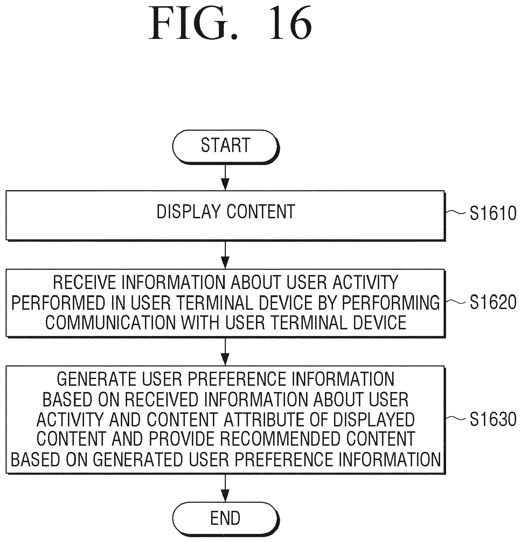

FIG. 16 is a flowchart illustrating a method of controlling a display device according to an exemplary embodiment of the present invention.

According to the method of controlling the display device shown in FIG. 16, a content is displayed in operation S1610.

In operation S1620, information about a user activity performed in the user terminal device is received by performing a communication with a user terminal device.

In operation S1630, user preference information is generated based on the received information about the user activity and a content attribute of a displayed content, and a recommended content is provided based on the generated user preference information.

In this case, in operation S1630 of providing the recommended content, the user preference information may be generated based on a correlation between the received information about the user activity and the displayed content.

Also, in operation S1630 of providing the recommended content, a determination may be made as to whether the received information about the user activity is in a positive or negative relation to the displayed content, and the user preference information may be generated based on the determined correlation.

In addition, in operation S1630 of providing the recommended content, the content attribute of the displayed content may be extracted based on metadata information of the displayed content.

Here, the information about the user activity may include at least one of a user activity time and the number of user activities.

Also, the information about the user activity may include information about a user activity associated with Social Networking Service (SNS).

In addition, the information about the user activity may include information about a user activity of at least one of a content, an attribute of the content, and at least one object included in the content.

Furthermore, in operation S1630 of providing the recommended content, the user preference information may be generated based on the received information about the user activity and at least one scene of the displayed content.

The method of controlling the display device may further include sensing a viewing pattern of a user, and in operation 1630 of providing the recommended content, the user preference information may be generated based on the viewing pattern of the user.

The method of controlling the display device may further include providing a preset item indicating a content attribute, which is a recommendation base, together when providing a recommended content according to the user preference information.

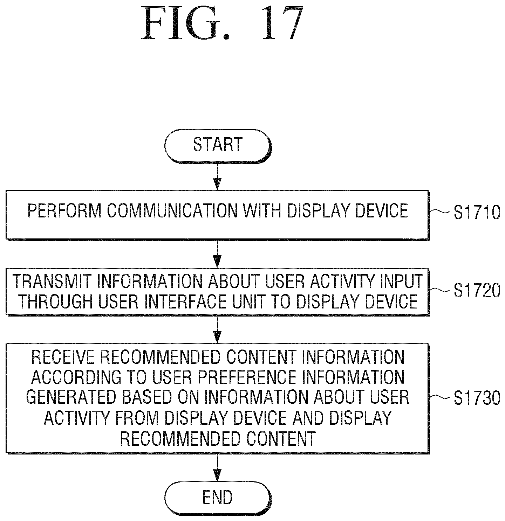

FIG. 17 is a flowchart illustrating a method of controlling a user terminal device according to an exemplary embodiment of the present invention.

According to the method of controlling the user terminal device shown in FIG. 17, a communication is performed with a display device in operation S1710.

In operation S1720, information about a user activity input through a user interface unit is transmitted to the display device.

In operation S1730, recommended content information generated according user preference information generated based on the information about the user activity is received from the display device and then displayed.

Here, the user preference information may be generated based on a correlation between the information about the user activity received from the display device and the displayed content.

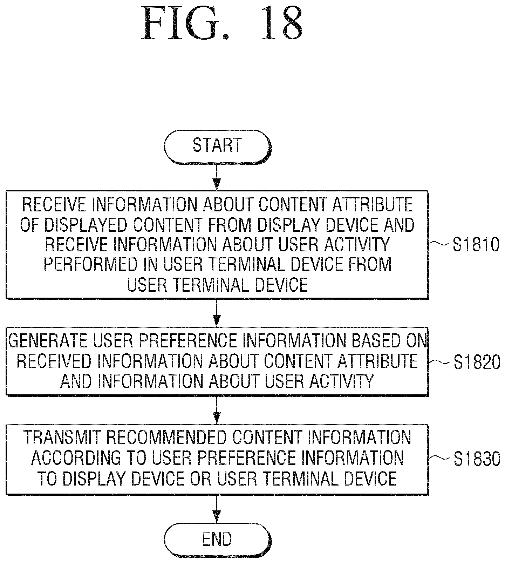

FIG. 18 is a flowchart illustrating a method of controlling a server according to an exemplary embodiment of the present invention.

According to the method of controlling the server shown in FIG. 18, information about a content attribute of a displayed content is received from a display device, and information about a user activity performed in a user terminal device is received from the user terminal device in operation S1810.

In operation S1820, user preference information is generated based on the received information about the content attribute and the information about the user activity.

In operation S1830, recommended content information generated according the user preference information is transmitted to the display device or the user terminal device.

Here, in operation S1830 of generating the user preference information, the user preference information may be generated based on a correlation between the information about the user activity received from the user terminal device and content displayed on the display device.

Also, in operation S1830 of generating the user preference information, a determination may be made as to whether the information about the user activity received from the user terminal device is in a positive or negative relation to the content displayed on the display device, and the user preference information may be generated based on the determined correlation.

Alternatively, a method of providing a recommended content according to an exemplary embodiment of the present invention may be embodied to be performed by an application that is software directly used by a user on an OS. Also, the application may be provided in an icon interface form on a screen of the display device 100 but is not limited thereto.

According to the present invention as described above, a TV viewing experience may be provided to a user.

In the above-described exemplary embodiment, various types of operations are performed in a display device. However, as mentioned above, various types of operations in the display device may be performed in a server or a user terminal device that performs a communication with the display device.

Methods of controlling a display device, a user terminal device, and a server according to various exemplary embodiments of the present invention may be embodied as computer executable program codes and provided to each of devices so as to be executed by a processor in a state of being stored on a non-transitory computer readable medium.

For example, a non-transitory computer readable medium that stores a program performing a control method including receiving information about a user activity performed in a user terminal device by performing a communication with the user terminal device, and generating user preference information based on the received information about the user activity and a content attribute of a displayed content and providing a recommended content based on the generated user preference information.

The non-transitory computer readable medium is a medium which does not store data temporarily such as a register, cash, and memory but stores data semi-permanently and is readable by devices. More specifically, the aforementioned applications or programs may be stored in the non-transitory computer readable media such as compact disks (CDs), digital video disks (DVDs), hard disks, Blu-ray disks, universal serial buses (USBs), memory cards, and read-only memory (ROM).

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display device comprising:
a display unit for displaying a content;
a communication unit for receiving information about a user activity performed in a user terminal device by performing a communication with the user terminal device; and
a control unit for generating user preference information based on the received information about the user activity and a content contribute of the displayed content and providing a recommended content based on the generated user preference information.

2. The display device of claim 1, wherein the control unit generates the user preference information based on a correlation between the received information about the user activity and the displayed content.

3. The display device of claim 2, wherein the control unit determines whether the received information about the user activity is in a positive or negative relation to the displayed content and generates the user preference information based on the determined correlation.

4. The display device of claim 1, wherein the control unit extracts the content attribute of the displayed content based on metadata information of the displayed content.

5. The display device of claim 1, wherein the information about the user activity comprises at least one of a user activity time and the number of user activities.

6. The display device of claim 1, wherein the information about the user activity comprises information about a user activity associated with Social Network Service (SNS).

7. The display device of claim 6, wherein the information about the user activity associated with the SNS is generated based on at least one of an action of capturing a content scene and uploading the content scene to an SNS server, an action of writing comments on the uploaded content scene, and an action of displaying a preference through voting or the like.

8. The display device of claim 1, wherein the information about the user activity comprises information about a user activity of at least one of the content, an attribute of the content, and at least one object comprised in the content.

9. The display device of claim 1, further comprising:
a sensor unit for sensing a viewing pattern of a user,
wherein the control unit generates the user preference information based on the viewing pattern of the user.

10. The display device of claim 1, wherein the control unit provides a preset item indicating a content attribute, which is a recommendation base, together when providing a recommended content according to the user preference information.

11. A user terminal device comprising:
a communication unit for performing a communication with a display device;
a user interface unit for receiving a user interaction; and
a control unit for transmitting information about a user activity input through the user interface unit to the display device, and receiving and displaying recommended content information according to user preference information generated based on the information about the user activity.

12. The user terminal device of claim 11, wherein the user preference information is generated based on a correlation between the received information about the user activity and the displayed content.

13. A server comprising:
a communication unit for receiving information about a content attribute of a displayed content from a display device and receiving information about a user activity performed in a user terminal device from the user terminal device; and
a control unit for generating user preference information based on the received information about the content attribute and the information about the user activity and transmitting recommended content information according to the user preference information to the display device or the user terminal device.

14. The server of claim 13, wherein the control unit determines whether the received information about the user activity is in a positive or negative relation to the displayed content and generates the user preference information based on the determined correlation.

15. A method of controlling a display device, the method comprising:
displaying a content;
receiving information about a user activity performed in a user terminal device by performing a communication with the user terminal device;
generating user preference information about the received information about the user activity and a content attribute of the displayed content and providing a recommended content based on the generated user preference information.
